(19) Europäisches Patentamt
European Patent Office
Office européen des brevets

(11) **EP 2 469 227 A1**

(12) **EUROPEAN PATENT APPLICATION**

(43) Date of publication:
**27.06.2012 Bulletin 2012/26**

(51) Int Cl.:
***G01C 15/10*** *(2006.01)* ***G01B 11/16*** *(2006.01)*

(21) Application number: **10425392.7**

(22) Date of filing: **24.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Agisco S.r.l.**
**20124 Milano (IT)**

(72) Inventors:
• **Robotti, Franco**
**20090 Segrate (MI) (IT)**
• **Curto, Giandavide**
**20091 Bresso (MI) (IT)**

(74) Representative: **Zizzari, Massimo**
**Studio Zizzari**
**P.le Roberto Ardigò, 42**
**00142 Roma (IT)**

(54) **Non-intrusive optical telecoordinometer**

(57)    Non-intrusive optical telecoordinometer (100), particularly suitable to detect displacements of points in between and/or of the free end of a *plumb-line* (101), where the other end of said *plumb-line* (101) is attached to a structure; the whole device is used to monitor movements or oscillations of the same structure, in respect to its vertical axis, and comprises:
- supporting means (102), preferably anchored laterally to a wall (105), and having two arms, (103) and (104), that are adjustable in length and in lateral tilt with reference to their longitudinal axis; a container (106), preferably shaped as a cylinder and supported by said supporting means (102), further comprising a radial opening (107) and achieving that a section of said *plumb-line* (101) can pass through, so that the same section is placed, for all the time, in an inner area of observation (112);

characterized in that further comprising:
- one or more cameras, (108) and (109), anchored inside above said container (106), preferably placed on a horizontal plane, and aligned towards said *plumb-line* (101), so that the *plumb-line* (101) appears in a frame as a vertical straight line;
- means for image acquisition and processing, in real time, where the images are detected by the above said cameras (108) and (109); said means including an electronic circuit further comprising: means for acquisition, as input, of a stream of modulated electric signals, that encode each image as a matrix of points, or pixels; means for processing coordinates of pixels, so that the estimated value of a distance, between said vertical line and a reference point, can be extracted; means for reconstruction of the outline of said points in between and/or of free end of a *plumb-line* (101), eventually combining the incoming data from the two cameras, (108) and (109); and means for storage of the detected and reconstructed outline of points in between and/or of said free end of a *plumb-line* (101) into a database.

Fig. 1

**Description**

The present invention is related to a non-intrusive optical telecoordinometer, that is a device placed at points in between and/or at the free end of a *plumb-line.* The other end of said *plumb-line* is attached to a structure, so that the device can monitor movements of the same structure, in respect to its vertical axis. Structures to be monitored can be represented by very high buildings, like i.e. dams, pylons of a bridge, bell towers, towers or any other elevating structure.

The detection of displacements can be achieved using image acquisition techniques, with small cameras, as i.e. *webcams,* and image processing means able to detect displacements at the free end of a *plumb-line* in respect to a reference position.

From the *state of the art* some special devices are known, using a *plumb-line* in order to supervise structural stability of high buildings, and more in particular using some automatic detectors, monitoring the movements of a section of said *plumb-line,* preferably the part close to the basis.

Italian patent IT 1.231.293 discloses a specific technology employing optical devices, and more in particular an optical emitting apparatus, providing a light radiation, and an optical receiving apparatus, detecting the same radiation and converting it to an electrical signal. The optical emitting apparatus is achieved by a generic light source; instead the optical receiving apparatus is given by a *charge coupled device* (CCD). Between said optical emitting apparatus and said optical receiving apparatus, a section of *plumb-line* is placed, that is further anchored to a structure to be monitored. A displacement of the same structure generates a displacement of said *plumb-line,* so that the outline can be detected and reconstructed detecting its "shadow" on the background of a matrix of CCD elements. Some embodiments of this solution employ a combination of more emitting and receiving elements, that are respectively placed along axis X and axis Y of a Cartesian reference system, so that the outline of said *plumb-line* in a 3D space can be detected with a high accuracy.

Another solution is disclosed from patent US 4.947.692, embedding a *laser* emitting device, directly attached to the free end of a *plumb-line,* and pointing down to a photo-detecting screen, where a *centroid* is defined, that can reveal the coordinates of the free end of said *plumb-line* in respect to a fixed reference system. A similar solution, although embedded in a different device, that is a *tiltmeter,* is that disclosed from patent US 4.627.172, where a LED diode emits a light signal, and said signal is transmitted through an optical fiber, up to the free end of a *plumb-line.* Then, this signal is detected by a photo-detecting screen, that can further measure the exact displacement of the same *plumb-line* in respect to a fixed reference system.

Another solution, using a different technology, is that disclosed from patent application CN 101.691.987, employing some magnetic elements, embedded in a *plumb-line,* and some electric circuits placed radially around it. The magnetic elements cause an induction of electromotive forces in electric circuits, and said forces are inversely proportional to their distance from said *plumb-line.*

Therefore, the measurements of the intensity of current, circulating in above said electric circuits, lead to the exact detection of the *plumb-line* in respect to a fixed reference system.

All the above solutions have some significant drawbacks, the most important of them being given by the requirement to embed, in the *plumb-line,* some additional components, like i.e. an optical emitting apparatus, or an optical fiber, or an electric circuit, or some magnetic elements. That leads as a consequence to a different inertia, balance and oscillating dynamics, therefore requiring more accurate activities of tuning and dispatching for the coordinometer. Furthermore, said solutions lead to a weakness of the components, in front of possible impacts against the end run elements, and because of exposure to bad environmental conditions, with sudden change of temperature and humidity, that lead to corrosion phenomena and deterioration of materials.

Furthermore, considering that, in *standard* embodiments of monitoring bridges and dams, the *plumb-line* can reach many tens of meters in length, the fact of having additional weights and items installed on it can jeopardize the life-time and efficiency of the entire device in the long term.

Further solutions, setting the *plumb-line* free, and measuring the displacement by optical systems, can show problems of reliability and accuracy, due to the requirements of continuous cleaning and maintenance that are typical for optical systems, and due to the usual installation sites that are often difficult to be reached and accessed by persons.

The present invention will overcome and solve all above problems, its main goal consisting in the development of a non-intrusive optical telecoordinometer, particularly suitable to detect displacements at points in between and/or at the free end of a *plumb-line;* where the other end of said *plumb-line* is attached to a structure, so that the device can monitor movements of the same structure, in respect to its vertical axis.

Another goal of invention consists in that, being non-intrusive, the optical telecoordinometer sets the *plumb-line* free, from additional weights and items, because it does not include any components installed on the same *line.*

Another further goal is that said device is composed of elements that can be easily installed in a comfortable and stable way, according to different embodiments on site; this device achieves a detection of different sections in length of said *plumb-line;* and it achieves an installation on existing *plumb-lines,* without any requirement to dismount and reassemble them.

Another further goal is that the detected data can be acquired, processed, saved and transmitted to a remote unit, in *real time,* in order to achieve an immediate reconstruction of the outline of said *plumb-line,* and to achieve a related visualization, in *real time,* on a screen of a human operator.

Another further goal of invention is to be composed of modular parts, so that it can be adapted to different embodiments on site, and different structures to be monitored, choosing the number of detection points and their connections.

Therefore, it is specific subject of the present invention a non-intrusive optical telecoordinometer, particularly suitable to detect displacements of points in between and/or of the free end of a *plumb-line,* where the other end of said *plumb-line* is attached to a structure; the whole device is used to monitor movements or oscillations of the same structure, in respect to its vertical axis, and comprises:

- supporting means, preferably anchored laterally to a wall, and having two arms, that are adjustable in length and in lateral tilt with reference to their longitudinal axis; a container, preferably shaped as a cylinder and supported by said supporting means, further comprising a radial opening and achieving that a section of said *plumb-line* can pass through, so that the same section is placed, for all the time, in an inner area of observation;

characterized in that further comprising:

- one or more cameras, anchored inside above said container, preferably placed on a horizontal plane, and aligned towards said *plumb-line,* so that the *plumb-line* appears in a frame as a vertical straight line;
- means for image acquisition and processing, in *real time,* where the images are detected by the above said cameras; said means including an electronic circuit further comprising: means for acquisition, as input, of a stream of modulated electric signals, that encode each image as a matrix of points, or *pixels;* means for processing coordinates of *pixels,* so that the estimated value of a distance, between said vertical line and a reference point, can be extracted; means for reconstruction of the outline of said points in between and/or of free end of a *plumb-line,* eventually combining the incoming data from the two cameras; and means for storage of the detected and reconstructed outline of said points in between and/or of free end of a *plumb-line* into a database.

Compared to known devices, the present invention offers further advantages, like i.e.: it achieves a high accuracy of the reconstruction of the outline of said *plumb-line,* with an error in the order of the tenths of a millimeter, because the images come from some high resolution cameras; the components are protected, inside the above container, in respect to bad environmental conditions, like sudden change of temperature and humidity; standard and cheap components are used, having a low level of complexity, so that the entire device has a very competitive cost and it is characterized by a low activity for management and maintenance. At the same time, this device can be composed of modular parts, and a modular data acquisition process, so that it can be adapted to many different embodiments and structures to be monitored.

This invention is now being described for illustrative but non-limiting purposes, with particular reference to figures of the enclosed drawings, where:

figure 1 is a perspective view of a non-intrusive optical telecoordinometer, according to the present invention;
figure 2 is a perspective view of a structure placed inside the telecoordinometer of figure 1, having an inner area of observation where a section of *plumb-line* is placed, and having two cameras for image acquisition and transmission;
figure 3 is a schematic top view of the telecoordinometer of figure 1, and it is shown where said cameras are placed, in respect to a fixed reference system, and it is shown the type of acquired images in *real time;*
figure 4 is a schematic lateral view of a part of *plumb-line,* where some sample points are reported for reconstruction of the outline, using a polynomial interpolation method;
figure 5 is graphic view of an example of lateral displacements of a *plumb-line,* detected in respect to axis X;
figure 6 is graphic view of an example of lateral displacements of a *plumb-line,* detected in respect to axis Y;
figure 7 is graphic view of an example of lateral displacements of a *plumb-line,* detected in respect to plane XY, said graphics obtained by composition of the previous displacements on axis X and axis Y.

It is here underlined that only few of the many conceivable embodiments of the present invention are described, which are just some specific non-limiting examples, having the possibility to describe many other embodiments based on the disclosed technical solutions of the present invention.

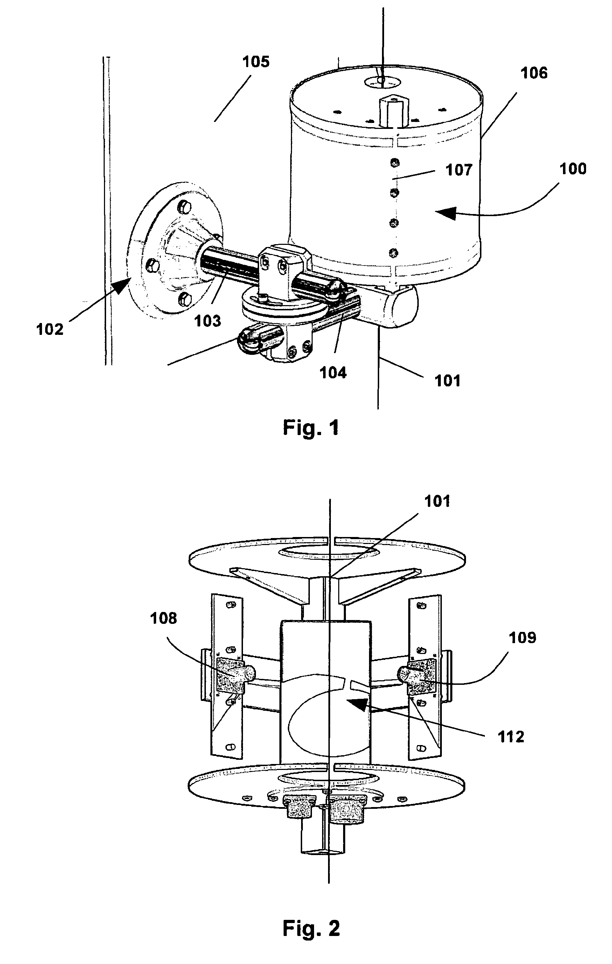

With reference to figure 1, the invention relates to a non-intrusive optical telecoordinator 100, particularly suitable to detect displacements of points in between and/or of the free end of a *plumb-line* 101, where the other end of said *plumb-line* 101 is attached to a structure. The whole device is used to monitor movements or oscillations of the same structure, in respect to its vertical axis. The main components of the optical telecoordinator 100 are: some supporting means 102, preferably anchored laterally to a wall 105, and having two arms, 103 and 104, that are adjustable in length and in lateral tilt with reference to their longitudinal axis; a container 106, preferably shaped as a cylinder and supported by said supporting means 102, further comprising a radial opening 107 and achieving that a section of said *plumb-line* 101 can pass through, so that the same section is placed, for all the time, in an inner area of observation 112 (figure 2).

The additional components, characterizing the invention, are: one or more cameras, 108 and 109, anchored inside above said container 106, preferably placed on a horizontal plane, and aligned towards said *plumb-line* 101, so that the *plumb-line* 101 appears in a frame as a vertical straight line; and means for image acquisition and processing, in *real time,* where the images are detected by the above said cameras 108 and 109. Said means for acquisition and processing include an electronic circuit further comprising: means for acquisition, as input, of a stream of modulated electric signals, that encode each image as a matrix of points, or *pixels;* means for processing coordinates of *pixels,* so that the estimated value of a distance, between said vertical line and a reference point, can be extracted; means for reconstruction of the outline of points in between and/or of said free end of a *plumb-line* 101 eventually combining the incoming data from the two cameras 108 and 109; and means for storage of the detected and reconstructed outline of points in between and/or of said free end of a *plumb-line* 101 into a database.

According to an alternative embodiment of the present invention, said cameras 108 and 109 can be represented by *webcams,* especially sensitive in the range of the infrared radiation, leading to an efficient and cheap solution.

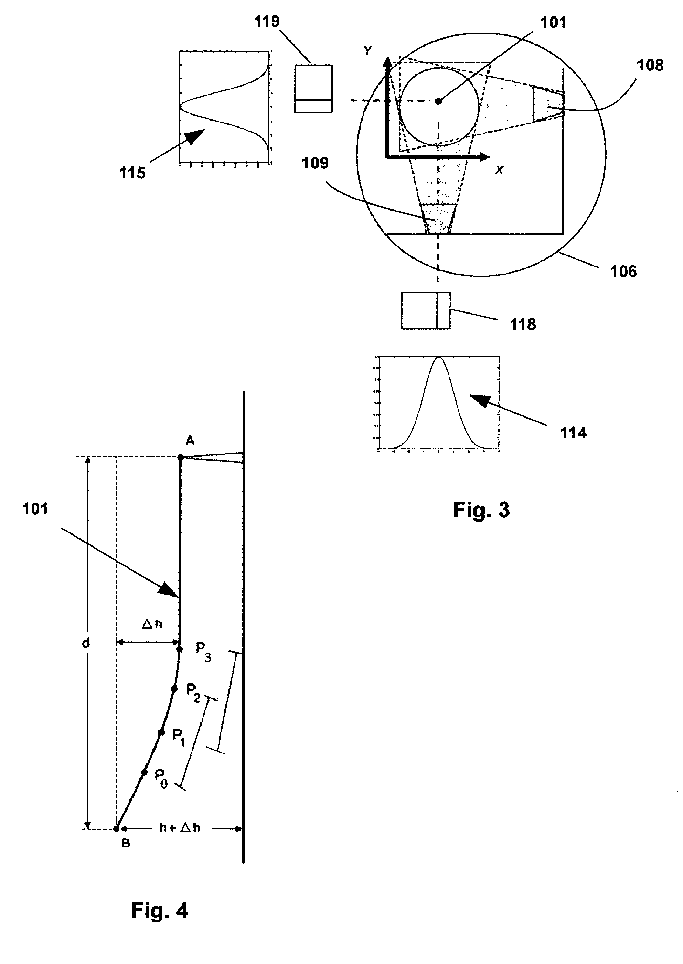

Figure 3 shows more in detail a top view of the placement of cameras 108 and 109 anchored inside container 106, and defining a Cartesian reference system that achieves, according to the detected displacements on axis X and axis Y, the reconstruction of a section of said *plumb-line* 101 in the 3D space.

As mentioned already, each camera 108 and 109 detects an image of the *plumb-line* 101, according to respective axis X and axis Y that, as a first approximation and for small displacements, can be assimilated to a vertical line, like that shown on screens 118 and 119 (the latter represented after a 90° rotation). Once defined from the image, the respective intensity distribution of *pixels,* 114 and 115, the average outline of the *plumb-line* 101 is given by the maximum intensity value of the same *pixels.* The described method is used, as a first instance, in order to define a reference outline of the *plumb-line* 101. Then, the respective detected coordinates are saved as some *zero measures.* Subsequently, the same method is used, as a second and as following instances, in order to achieve the displacement of the outline of *plumb-line* 101, in respect to the above saved *zero measures.*

An alternative embodiment of the invention discloses a method of piecewise polynomial approximation, used to represent the outline of the *plumb-line* 101, detected on each single axis.

With reference to figure 4, the method is composed of the following steps:

- the detection points are collected in sets of three points, starting from the bottom end of the section of *plumb-line* 101, going up to the top end;
- for each set of three points $P_0$, $P_1$, $P_2$ the following coordinates are considered

$$P_0(x_0, y_0) \qquad P_1(x_1, y_1) \qquad P_2(x_2, y_2) \qquad (1)$$

and a parabolic approximation is chosen, of type:

$$x = a \cdot y^2 + b \cdot y + c \qquad (2)$$

changing the above coordinates of points, the following system is obtained:

$$\begin{cases} x_0 = a \cdot y_0^2 + b \cdot y_0 + c \\ x_1 = a \cdot y_1^2 + b \cdot y_1 + c \\ x_2 = a \cdot y_2^2 + b \cdot y_2 + c \end{cases} \qquad (3)$$

that can be written in a matrix form:

$$\begin{pmatrix} x_0 \\ x_1 \\ x_2 \end{pmatrix} = \begin{pmatrix} y_0^2 \ y_0 \ 1 \\ y_1^2 \ y_1 \ 1 \\ y_2^2 \ y_2 \ 1 \end{pmatrix} \cdot \begin{pmatrix} a \\ b \\ c \end{pmatrix} \qquad (4)$$

that is:

$$X = A \cdot T \qquad (5)$$

solving the matrix equation (5), with $det\,(A){\neq}0$ it is obtained:

$$\begin{pmatrix} a \\ b \\ c \end{pmatrix} = T = A^{-1} \cdot X \qquad (6)$$

from which, parameters $a,\ b,\ c$ are calculated and put in formula (2), so to lead to the graphic curve of the deformation outline, locally reconstructed;

- a new set of three points, that is given by a one step forward displacement, is composed by $P_1$, $P_2$, $P_3$, and the previous calculation is repeated on the new points, up to the top end of the section of *plumb-line* 101;
- when the end of the section of *plumb-line* 101 is reached, the method is repeated considering new sets of three points taken in reverse order, and going backward from the top end to the bottom end.

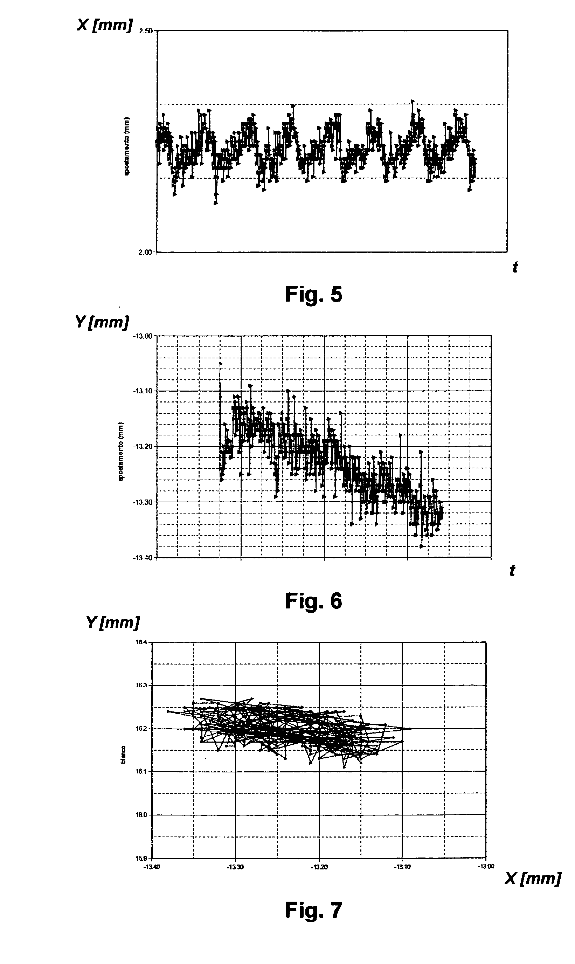

In this example either, the described method is used as a first instance, in order to define a reference outline of the *plumb-line* 101. Then, the respective detected coordinates are saved as some *zero measures.* Subsequently, the same method is used, as a second and as following instances, in order to achieve the displacement of the outline of *plumb-line* 101, in respect to the above saved *zero measures.* Figures 5 and 6 show outcomes from experiments, with reference to an example of detections concerning displacements on axis X and axis Y, then composed on a XY plane, as represented in figure 7. There is evidence to say that the used method implies a very high level of accuracy, around the tenths of a millimeter.

From a general point of view, it is possible to use a certain number of optical telecoordinometers 100, together, according to the type of embodiments on site and level of required accuracy, each of them detecting a different section of the same *plumb-line* 101. In example, in case of embodiments on a dam, it is possible to install a set of optical telecoordinometers 100, all aligned vertically.

All data coming from the optical telecoordinometers 100, and related to measurements of the outline of a *plumb-line* 101, are transmitted, in *real time,* to a remote control unit. The data transmission can be achieved by modulation of electric signals on conductive cables, or modulation of optical signals on optical fibers, or modulation of electromagnetic radiation on air, or modulation of electric signals routed on fixed, mobile or satellite telephone networks, or a combination of the above said techniques.

In the many conceivable embodiments, optical telecoordinometers 100 can be supplied by electric energy coming from one or more of the following means: a cable connected to the national electric network; a current generator powered by a fuel; a battery or an external accumulator; an internal rechargeable battery; a device with solar panels.

Furthermore, optical telecoordinometers 100 can be connected to the above said electronic circuit, according to one of the following topologies: star, tree, line, ring. Then, one or more connections between optical telecoordinometers 100 and the electronic circuit can be redundant, with connections that can be duplicate, triple, or more, using one, or a combination of, data transmission techniques chosen from the previously listed ones.

According to the different conceivable embodiments, said electronic circuit and said control unit can be contained inside the same processing means, that can be i.e. a *personal computer,* or a *tablet PC,* or a *smartphone,* or a PDA, or a *workstation,* or a *mainframe,* or any other possible processing or multiprocessing device.

Another embodiment of the present invention includes some additional damping means, suitable to damp oscillations of said *plumb-line* 101. They are composed of a special weight, attached at the free lower end of the same *plumb-line* 101, that is completely immersed in a tank full of a *silicone oil.* The oscillations of this weight are highly damped, because of the high oil viscosity, and that makes it possible, after a significant displacement, that the *plumb-*

*line* 101 returns quickly to a steady position.

After description of above examples there is evidence to say that this invention achieves all its goals and, in particular, a non-intrusive optical telecoordinometer, particularly suitable to detect displacements at points in between and/or at the free end of a *plumb-line;* where the other end of said *plumb-line* is attached to a structure, so that the device can monitor movements of the same structure, in respect to its vertical axis.

Furthermore, being non-intrusive, the optical telecoordinometer sets the *plumb-line* free, from additional weights and items, because it does not include any components installed on the same *line.*

Further according to invention, said device is composed of elements that can be easily installed in a comfortable and stable way, according to different embodiments on site; this device achieves a detection of different sections in length of said *plumb-line;* and it achieves an installation on existing *plumb-lines,* without any requirement to dismount and reassemble them.

Another achievement consists in that the detected data can be acquired, processed, saved and transmitted to a remote unit, in *real time,* in order to achieve an immediate reconstruction of the outline of said *plumb-line,* and to achieve a related visualization, in *real time,* on a screen of a human operator.

Finally, the invention is composed of modular parts, so that it can be adapted to different embodiments on site, and different structures to be monitored, choosing the number of detection points and their connections.

This invention is described for illustrative but non-limiting purposes, following some preferred achievements; however it goes without saying that modifications and/or changes would be introduced without departing from the relevant scope, as defined in the enclosed claims.

**Claims**

1. Non-intrusive optical telecoordinometer (100), particularly suitable to detect displacements of points in between and/or of the free end of a *plumb-line* (101), where the other end of said *plumb-line* (101) is attached to a structure; the whole device is used to monitor movements or oscillations of the same structure, in respect to its vertical axis, and comprises:

   - supporting means (102), preferably anchored laterally to a wall (105), and having two arms, (103) and (104), that are adjustable in length and in lateral tilt with reference to their longitudinal axis; a container (106), preferably shaped as a cylinder and supported by said supporting means (102), further comprising a radial opening (107) and achieving that a section of said *plumb-line* (101) can pass through, so that the same section is placed, for all the time, in an inner area of observation (112);

   **characterized in that** further comprising:

   - one or more cameras, (108) and (109), anchored inside above said container (106), preferably placed on a horizontal plane, and aligned towards said *plumb-line* (101), so that the *plumb-line* (101) appears in a frame as a vertical straight line;
   - means for image acquisition and processing, in real time, where the images are detected by the above said cameras (108) and (109); said means including an electronic circuit further comprising: means for acquisition, as input, of a stream of modulated electric signals, that encode each image as a matrix of points, or pixels; means for processing coordinates of pixels, so that the estimated value of a distance, between said vertical line and a reference point, can be extracted; means for reconstruction of the outline of points in between and/or of said free end of a plumb-line (101), eventually combining the incoming data from the two cameras, (108) and (109); and means for storage of the detected and reconstructed outline of points in between and/or of said free end of a plumb-line (101) into a database.

2. Non-intrusive optical telecoordinometer (100), according to previous claim, **characterized in that**: once defined from the image, the respective intensity distribution of *pixels,* (114) and (115), detected by cameras (108) and (109), the average outline of the *plumb-line* (101) is given by the maximum intensity value of the same *pixels.*

3. Non-intrusive optical telecoordinometer (100), according to one or more of previous claims, **characterized in that** it embeds a method of piecewise polynomial approximation, used to represent the outline of the *plumb-line* (101), detected on each single axis, composed of the following steps:

   - the detection points are collected in sets of three points, starting from the bottom end of the section of *plumb-line* (101), going up to the top end;

- for each set of three points $P_0$, $P_1$, $P_2$ the following coordinates are considered

$$P_0(x_0, y_0) \qquad P_1(x_1, y_1) \qquad P_2(x_2, y_2) \qquad (1)$$

and a parabolic approximation is chosen, of type:

$$x = a \cdot y^2 + b \cdot y + c \qquad (2)$$

changing the above coordinates of points, the following system is obtained:

$$\begin{cases} x_0 = a \cdot y_0^2 + b \cdot y_0 + c \\ x_1 = a \cdot y_1^2 + b \cdot y_1 + c \\ x_2 = a \cdot y_2^2 + b \cdot y_2 + c \end{cases} \qquad (3)$$

that can be written in a matrix form:

$$\begin{pmatrix} x_0 \\ x_1 \\ x_2 \end{pmatrix} = \begin{pmatrix} y_0^2 & y_0 & 1 \\ y_1^2 & y_1 & 1 \\ y_2^2 & y_2 & 1 \end{pmatrix} \cdot \begin{pmatrix} a \\ b \\ c \end{pmatrix} \qquad (4)$$

that is:

$$X = A \cdot T \qquad (5)$$

solving the matrix equation (5), with $det\,(A) \neq 0$ it is obtained:

$$\begin{pmatrix} a \\ b \\ c \end{pmatrix} = T = A^{-1} \cdot X \qquad (6)$$

from which, parameters $a$, $b$, $c$ are calculated and put in formula (2), so to lead to the graphic curve of the deformation outline, locally, reconstructed;
- a new set of three points, that is given by a one step forward displacement, is composed by $P_1$, $P_2$, $P_3$, and the previous calculation is repeated on the new points, up to the top end of the section of *plumb-line* (101);
- when the end of the section of *plumb-line* (101) is reached, the method is repeated considering new sets of three points taken in reverse order, and going backward from the top end to the bottom end.

4. Non-intrusive optical telecoordinometer (100), that embeds a method of piecewise polynomial approximation, according to previous claim, **characterized in that**: the method is used as a first instance, in order to define a reference outline of the *plumb-line* (101); then, the respective detected coordinates are saved as some *zero measures;* subsequently, the same method is used, as a second and as following instances, in order to achieve the displacement of the outline of *plumb-line* (101), in respect to the above saved *zero measures.*

**5.** Non-intrusive optical telecoordinometer (100), according to one or more of previous claims, **characterized in that** said cameras (108) and (109) are represented by *webcams,* especially sensitive in the range of the infrared radiation.

**6.** Non-intrusive optical telecoordinometer (100), according to one or more of previous claims, **characterized in that** it is part of a set of measuring devices, all identical and aligned vertically, each of them detecting a different section of the same *plumb-line* (101).

**7.** Non-intrusive optical telecoordinometer (100), according to one or more of previous claims, **characterized in that** all data coming from the optical telecoordinometers (100), and related to measurements of the outline of a *plumb-line* (101), are transmitted, in *real time,* to a remote control unit; the data transmission can be achieved by modulation of electric signals on conductive cables, or modulation of optical signals on optical fibers, or modulation of electromagnetic radiation on air, or modulation of electric signals routed on fixed, mobile or satellite telephone networks, or a combination of the above said techniques.

**8.** Non-intrusive optical telecoordinometer (100), according to one or more of previous claims, **characterized in that** being supplied by electric energy coming from one or more of the following means: a cable connected to the national electric network; a current generator powered by a fuel; a battery or an external accumulator; an internal rechargeable battery; a device with solar panels.

**9.** Non-intrusive optical telecoordinometer (100), according to one or more of previous claims, **characterized in that** one or more of said optical telecoordinometers (100) are connected to the above said electronic circuit, according to one of the following topologies: star, tree, line, ring.

**10.** Non-intrusive optical telecoordinometer (100), according to one or more of previous claims, **characterized in that** said electronic circuit and said control unit are contained inside the same processing means, that can be i.e. a *personal computer,* or a *tablet PC,* or a *smartphone,* or a PDA, or a *workstation,* or a *mainframe,* or any other possible processing or multiprocessing device.

**11.** Non-intrusive optical telecoordinometer (100), according to previous claims 7 and 9, **characterized in that** one or more connections between optical telecoordinometers (100) and the electronic circuit can be redundant, with connections that can be duplicate, triple, or more, using one, or a combination of, data transmission techniques chosen from the ones listed in previous claim 7.

**12.** Non-intrusive optical telecoordinometer (100), according to one or more of previous claims, **characterized in that** comprising additional damping means, suitable to damp oscillations of said *plumb-line* (101); they are composed of a special weight, attached at the free lower end of the same *plumb-line* (101), that is completely immersed in a tank full of a *silicone oil;* the oscillations of this weight are highly damped, because of the high oil viscosity, and that makes it possible, after a significant displacement, that the *plumb-line* (101) returns quickly to a steady position.

**Fig. 1**

**Fig. 2**

**Fig. 3**

**Fig. 4**

**X [mm]**

**Fig. 5**

**Y [mm]**

**Fig. 6**

**Y [mm]**

**X [mm]**

**Fig. 7**

| | Europäisches Patentamt European Patent Office Office européen des brevets | **EUROPEAN SEARCH REPORT** | Application Number EP 10 42 5392 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 409 341 A1 (ISMES SPA [IT]) 23 January 1991 (1991-01-23) * figures 5,10 * * column 1, line 22 - line 25 * * column 8, line 9 - line 10 * * column 8, line 37 - column 9, line 13 * * column 10, line 41 - line 43 * ----- | 1-12 | INV. G01C15/10 G01B11/16 |
| A | WO 92/04595 A1 (CELIO ENGINEERING SA [CH]) 19 March 1992 (1992-03-19) * figure 3 * ----- | 1-12 | |
| | | | TECHNICAL FIELDS SEARCHED (IPC) G01B G01C |

The present search report has been drawn up for all claims

| Place of search | Date of completion of the search | Examiner |
|---|---|---|
| The Hague | 24 May 2011 | Berbil Bautista, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

**EP 2 469 227 A1**

## ANNEX TO THE EUROPEAN SEARCH REPORT
## ON EUROPEAN PATENT APPLICATION NO.

EP 10 42 5392

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2011

| Patent document cited in search report | | Publication date | Patent family member(s) | | Publication date |
|---|---|---|---|---|---|
| EP 0409341 | A1 | 23-01-1991 | CA | 2021537 A1 | 21-01-1991 |
| | | | DE | 69003320 D1 | 21-10-1993 |
| | | | IT | 1231293 B | 28-11-1991 |
| | | | US | 5050424 A | 24-09-1991 |
| WO 9204595 | A1 | 19-03-1992 | CH | 681569 A5 | 15-04-1993 |
| | | | DE | 59105453 D1 | 14-06-1995 |
| | | | EP | 0497942 A1 | 12-08-1992 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1231293
- US 4947692 A
- US 4627172 A
- CN 101691987